# EUROPEAN PATENT APPLICATION

(11) **EP 0 966 166 A1**
(43) Date of publication of application: **22.12.1999**
(21) Application number: 98440121.6
(22) Date of filing: 08.06.1998
(51) Int. Cl.: H04Q 3/00

(54) **Data security in a telecommunication switch**

(71) Applicant: ALCATEL, 75008 Paris (FR)
(72) Inventor: Wellmann, Dipl.-Ing., 70499 Stuttgart (DE)
(74) Representative: Schätzle, Albin, Dipl.-Phys.

(57) **Abstract**

Known telecommunication switches for coupling terminals may receive and/or comprise control information which, although confidential, is not protected, like confidential information about certain individuals or about certain switch functions. By providing a telecommunication switch with detection means for detecting at least a part of said control information, whereby, in response to a detection result, an encryption or decryption process of at least a further part of said control information is activated or deactivated, said control information is protected. Due to this it becomes extremely difficult for third parties to get access to said confidential information.

## Description

The invention relates to a telecommunication switch comprising
- in/outputs to be coupled with terminals,
- coupling means for coupling at least two in/outputs, and
- control means for controlling said coupling means in response to control information.

Such a telecommunication switch is of common general knowledge and, in general, either a switch designed for fixed telecommunication or a switch designed for mobile telecommunication. Such a switch performs certain functions defined by said control information, and comprises control information (data) about certain individuals. In both cases, for a third party it is not that difficult to get access to said control information (for example to interpret/understand/evaluate it).

This telecommunication switch is disadvantageous, inter alia, because of third parties having too easily access to said control information (for example to interpret/understand/evaluate it).

It is an object of the invention, inter alia, to provide a telecommunciation switch as defined in the preamble, with which it will be extremely difficult for third parties to get access to all of said control information.

Thereto, the telecommunication switch according to the invention is characterised in that the telecommunication switch comprises - detection means for detecting at least a part of said control information for, in response to a detection result, activating or deactivating an encryption or decryption process of at least a further part of said control information (for example, said control means could use decrypted control information instead of regularly used clear control information).

By using said detection means for detecting said part of said control information and encrypting or decrypting said further part of said control information, third parties no longer can get access to all of said control information. The encryption and decryption could for example take place outside said telecommunication switch, and said part and said further part could be completely different or (padially) the same.

The telecommunication switch according to the invention thus solves the problem, inter alia, of third parties getting too easily access to all of said control information (in other words the problem is solved of disclosing said control information).

The invention is based on the insight, inter alia, that in a telecommunication switch it could be disavantageous to encrypt or decrypt all information all the time, and that when encryption or decryption is necessary, this should only be done in response to a certain detection.

A first embodiment of the telecommunication switch according to the invention is characterised in that the telecommunication switch comprises - encryption/decryption means coupled to said control means and to said detection means for activating or deactivating said encryption or decryption process.

According to this first embodiment, the telecommunication switch is provided with said encryption/decryption means, thereby avoiding a connection between telecommunication switch and encryption/decryption means.

A second embodiment of the telecommunication switch according to the invention is characterised in that said encryption/decryption means comprise - conversion/deconversion means for converting or deconverting said further part of said control information.

According to this second embodiment, after detection of said pad, said further part is converted or deconverted, with said converted or deconverted further part being of importance to the telecommunication switch, and with said further part without conversion or deconversion being meaningless to the telecommunication switch.

A third embodiment of the telecommunication switch according to the invention is characterised in that said detection means comprise - comparing means for comparing said part of said control information with at least one predefined code word (like for example an identifier).

According to this third embodiment, only when said part of said control information corresponds with said predefined code word, encryption or decryption takes place. Of course, there could be several code words, each one resulting in the same or a different encryption and/or decryption.

A fourth embodiment of the telecommunication switch according to the invention is characterised in that said control information at least partly corresponds with signalling information originating from a terminal.

According to this fourth embodiment, for example a first calling subscriber has dialled the phone number of a second called subscriber, and (a part of) this phone number is detected as for example being equal to a predefined code word, resulting in for example the encryption (like a conversion) of (a part of) this phone number because of having a secret destination, or resulting in for example the decryption (like a deconversion) of (a part of) this phone number because of additional functions to be activated for national security.

A fifth embodiment of the telecommunication switch according to the invention is characterised in that said control information is at least partly generated in response to signalling information originating from a terminal.

According to this fifth embodiment, the telecommunication switch performs different functions in dependence of different control information, and (a part of) this control information is detected as for example being equal to a predefined code word, resulting in for example the encryption (like a conversion) of (a part of) this control information because of this specific control information being meaningless without encryption and only being of importance after being encrypted, or resulting in for example the decryption (like a deconversion) of (a part of) this control information because of this specific control information being meaningless without decryption and only being of importance after being decrypted.

The invention further relates to control means for use in a telecommunication switch comprising
- in/outputs to be coupled with terminals, and
- coupling means for coupling at least two in/outputs,
which control means control said coupling means in response to control information.

The control means according to the invention are characterised in that the control means comprise
- detection means for detecting at least a part of said control information for, in response to a detection result, activating or deactivating an encryption or decryption process of at least a further part of said control information (for example, decrypted control information could be used in said control means).

A first embodiment of the control means according to the invention is characterised in that the control means comprise
- encryption/decryption means coupled to said detection means for activating or deactivating said encryption or decryption process.

A second embodiment of the control means according to the invention is characterised in that that said encryption/decryption means comprise
- conversion/deconversion means for conveding or deconveding said further part of said control information.

A third embodiment of the control means according to the invention is characterised in that said detection means comprise
- comparing means for comparing said part of said control information with at least one predefined code word (like for example an identifier).

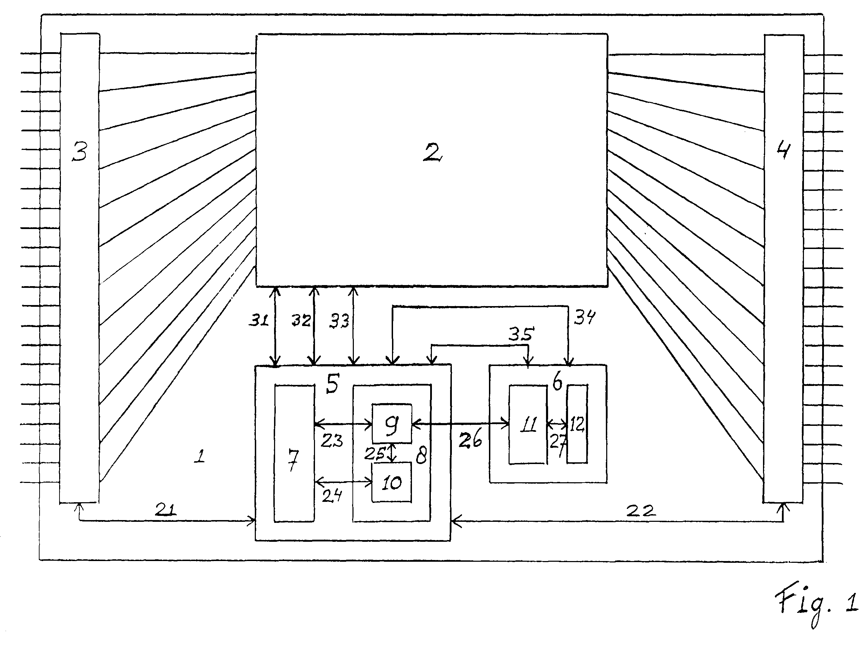

The invention will be explained in greater detail at the hand of an embodiment disclosed in the drawing, whereby
figure 1 discloses a telecommunication switch according to the invention comprising control means according to the invention.

The telecommunication switch 1 according to the invention disclosed in figure 1 comprises switching means 2 of which a first side is coupled to in/outputs via an interface 3 and of which a second side is coupled to in/outputs via an interface 4 and of which a third side is coupled to control means 5 via three control connections 31, 32 and 33. Interface 3 is coupled to control means 5 via a control connection 21 and interface 4 is coupled to control means 5 via control connection 22. Control means 5 is coupled to encryption/decryption means 6 via two control connections 34 and 35. Switching means 2 and interfaces 3 and 4 together farm coupling means for coupling at least two in/outputs.

Control means 5 comprise a processor 7 coupled to detection means 8 via two control connections 23 and 24. Detection means 8 comprise comparing means 9 connected to control connection 23 and memory means 10 connected to control connection 24, with comparing means 9 and memory means 10 being mutually coupled via a control connection 25. Encryption/decryption means 6 comprise conversion/deconversion means 11 coupled to storage means 12 via a control connection 27 and coupled to comparing means 9 via a control connection 26.

Without the encryption/decryption facility the telecommunication switch 1 as shown in figure 1 functions as follows. A subscriber using a corded or cordless terminal for example coupled to interface 3 directly or indirectly via an exchange or using a mobile terminal for example coupled to interface 3 indirectly via a Base Station Controller or BSC who for example wants to talk with a further subscriber using a further corded or cordless terminal for example coupled to interface 4 directly or indirectly via a further exchange or using a further mobile terminal for example coupled to interface 4 indirectly via a further Base Station Controller or BSC sends signalling information indicating at least the number of the further subscriber. This signalling information arrives at interface 3, whereby control means 5 are informed via connection 21. Detection means 8 detect said signalling information and inform processor 7 via either connection 23 or connection 24 (with control information), in response to which processor 7 controls switching means 2 via either connection 31 or 32 or 33 (with control information) in such a way that said subscriber is connected with said further subscriber via interface 3, switching means 2 and interface 4.

So, in practice, switch 1 uses control information, and in some cases third parties should not have an easy access to this control information, for example when a subscriber is automatically monitored for national security (first embodiment), or for example when this control information is used to allow first switch functions and to prevent second switch functions because of the switch owner having paid for only said first switch functions and not for said second switch functions (second embodiment).

According to said first embodiment, a first number (for example 0.01% of all) of subscribers (who make a call or are called) is automatically monitored (tapped off). When control means 5 would comprise a first list of the telephone numbers of this first number of subscribers, a third party (like one of said subscribers) could easily get access to this first list. To prevent this, a second list comprising a second number (for example 10% of all) of subscribers is made, which respective second list and second number comprise said respective first list and first number. This second list is stored in memory means 10. When a subscriber belonging to this second list makes a call or is called, control means 5 are informed (with control information) either via interface 3 and connection 21 or via interface 4 and connection 22, after which detection means 8 detect that this subscriber belongs to the second list, for example in response to comparing means 9 having compared his telephone number (in general control information) with the numbers of the second list stored in memory means 10 (in general with at least one predefined code word, like for example an identifier). Then, for example via connection 26, said telephone number (in general control information) is supplied to encryption/decryption means 6, in which conversion/deconversion means 11 for example convert the telephone number (in general control information) into converted control information, which is compared with a converted version of said first list stored in storage means 12. In case of equality, the original telephone number (in general the original control information) or the deconverted control information either is sent back to control means 5 via connection 26, 34 or 35, for controlling switching means 2, or is sent directly to switching means 2 via a connection not shown in the drawing, for establishing a monitored coupling, and in case of unequality, the original telephone number (in general the original control information) or the deconverted control information either is sent back to control means 5 via connection 26, 34 or 35, for controlling switching means 2, or is sent directly to switching means 2 via a connection not shown in the drawing, for establishing a non-monitored coupling.

Due to only a converted version of said first list being stored in storage means 12, it is impossible for third parties to get an overview of the entire non-converted list. Of course, when watching switch 1 operating, individual information can be determined, but this can be made more difficult by either for example using said direct connection (between encryption/decryption means 6 and switching means 2) not shown in the drawing or by for example an alternating use of connections 26, 34 and 35. In this case the control information comprises the telephone number (a part) as well as the converted telephone number (a further part).

According to said second embodiment, first control information related to switch functions like for example 'follow me', 'mail box', 'automatic call back', 'automatic transfer', 'wake up call' etc. is stored in a converted way in storage means 12. When such a switch function is requested by processor 7 of control means 5, detection means 8 detect this, for example due to comparing means 9 comparing second control information with information stored in memory means 10 (in general with at least one predefined code word). After said detection in control means 5, processor 7 is informed, resulting in processor 7 requesting encryption/decryption means 6 to deconvert the converted first control information and to generate the deconverted first control information. This deconversion is done by conversion/deconversion means 11, but only in case the switch owner has paid for this switch function. Only in response to said deconverted first control information the corresponding switch function is performed.

Due to, after detection of said second control information (a part), the deconversion of said converted first control information (a further part) only taking place in case the switch owner has paid for the corresponding switch function, it is impossible for third parties to get a deconverted overview of the entire converted first control information, which will make it extremely difficult to activate/use switch functions which have not been paid for. In this case the control information comprises the second control information (a part) as well as the converted first control information (a further part).

Instead of said encryption/decryption means 6 being situated inside switch 1 and next to control means 5, it is possible to locate (one or more parts of) said encryption/decryption means 6 outside switch 1, or to integrate (one or more parts of) encryption/decryption means 6 into control means 5.

The control connections 21, 22, 31, 32, 33, 34 and 35 are not drawn inside control means 5 and encryption/decryption means 6 for sake of clarity. These control connections could of course be coupled to the different pads of control means 5 and encryption means 6 by using one or more interfaces and switching means similar to interfaces 3 and 4 and switching means 2.

The term 'conversion/deconversion means' should be regarded to be as broad as possible, and includes at least a conversion function and/or a deconversion function. The term 'encryption/decryption means' should be regarded to be as broad as possible, and includes at least an encryption function and/or a decryption function. The term 'in/output' comprises in general at least an input and/or an output, whereby each term 'in/output' could for example be either a real in/output to be coupled to a bidirectional connection and for example using a so-called fork circuit not shown in the drawing, or a separate input and output, each one to be coupled to a unidirectional connection, etc.

With respect to certain parts suddenly comprising more in/outputs than usual, it is observed that this is of common general knowledge to a person skilled in the art, who for example will install a multiplexing/demultiplexing function and/or multiple access functions inside the certain part to get an extra in/output. In case a certain part is not to be amended or cannot be amended, said multiplexing/demultiplexing function and/or multiple access functions could be installed outside said certain part.

## Claims

**1.** Telecommunication switch comprising
- in/outputs to be coupled with terminals,
- coupling means for coupling at least two in/outputs, and
- control means for controlling said coupling means in response to control information,
characterised in that the telecommunication switch comprises
- detection means for detecting at least a part of said control information for, in response to a detection result, activating or deactivating an encryption or decryption process of at least a further part of said control information.

**2.** Telecommunication switch according to claim 1, characterised in that the telecommunication switch comprises
- encryption/decryption means coupled to said control means and to said detection means for activating or deactivating said encryption or decryption process.

**3.** Telecommunication switch according to claim 2, characterised in that said encryption/decryption means comprise
- conversion/deconversion means for converting or deconverting said further part of said control information.

**4.** Telecommunication switch according to claim 1, 2 or 3, characterised in that said detection means comprise
- comparing means for comparing said part of said control information with at least one predefined code word.

**5.** Telecommunication means according to claim 1, 2, 3 or 4, characterised in that said control information at least partly corresponds with signalling information originating from a terminal.

**6.** Telecommunication switch according to claim 1, 2, 3 or 4, characterised in that said control information is at least partly generated in response to signalling information originating from a terminal.

**7.** Control means for use in a telecommunication switch comprising
- in/outputs to be coupled with terminals, and
- coupling means for coupling at least two in/outputs,
which control means control said coupling means in response to control information,
characterised in that the control means comprise
- detection means for detecting at least a part of said control information for, in response to a detection result, activating or deactivating an encryption or decryption process of at least a further part of said control information.

**8.** Control means according to claim 7, characterised in that the control means comprise
- encryption/decryption means coupled to said detection means for activating or deactivating said encryption or decryption process.

**9.** Control means according to claim 8, characterised in that said encryption/decryption means comprise
- conversion/deconversion means for converting or deconverting said further part of said control information.

**6.** Telecommunication switch according to claim 1, 2, 3 or 4, characterised in that said control information is at least partly generated in response to signalling information originating from a terminal.

**7.** Control means for use in a telecommunication switch comprising
- in/outputs to be coupled with terminals, and
- coupling means for coupling at least two in/outputs,
which control means control said coupling means in response to control information,
characterised in that the control means comprise
- detection means for detecting at least a part of said control information for, in response to a detection result, activating or deactivating an encryption or decryption process of at least a further part of said control information.

**8.** Control means according to claim 7, characterised in that the control means comprise
- encryption/decryption means coupled to said detection means for activating or deactivating said encryption or decryption process.

**9.** Control means according to claim 8, characterised in that said encryption/decryption means comprise
- conversion/deconversion means for converting or deconverting said further part of said control information.

**10.** Control means according to claim 7, 8 or 9, characterised in that said detection means comprise
- comparing means for comparing said part of said control information with at least one predefined code word.
